(19) Europäisches Patentamt
European Patent Office
Office européen des brevets

(11) **EP 3 640 667 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(51) Int Cl.:
***G01S 7/481*** *(2006.01)*

(21) Anmeldenummer: **19200316.8**

(22) Anmeldetag: **30.09.2019**

(54) **OPTOELEKTRONISCHER SENSOR UND VERFAHREN ZUR ERFASSUNG VON OBJEKTEN**

OPTOELECTRONIC SENSOR AND METHOD FOR DETECTING OBJECTS

CAPTEUR OPTOÉLECTRONIQUE ET PROCÉDÉ DE DÉTECTION D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2018 DE 102018125826**

(43) Veröffentlichungstag der Anmeldung:
**22.04.2020 Patentblatt 2020/17**

(73) Patentinhaber: **SICK AG**
**79183 Waldkirch (DE)**

(72) Erfinder:
• **Gimpel, Hartmut**
**78467 Konstanz (DE)**
• **Jägel, Matthias**
**79104 Freiburg (DE)**

(56) Entgegenhaltungen:
CN-A- 107 861 317        DE-A1-102017 107 666
US-A1- 2006 187 470

**Beschreibung**

Die Erfindung betrifft einen optoelektronischen Sensor und ein Verfahren zur Erfassung von Objekten in einem Überwachungsbereich nach dem Oberbegriff von Anspruch 1 beziehungsweise 9.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich eines einstrahligen Lichttasters zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung und zur Gewinnung zusätzlicher Abstandsdaten besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Prinzipiell lassen sich mehrere Abtaststrahlen durch Vervielfältigung der Bauteile eines einstrahligen Geräts erreichen. Das ist aber unnötig aufwändig und komplex. Daher gibt es im Stand der Technik Ansätze, Bauteile mehrfach zu nutzen. So werden in der DE 10 2015 121 839 A1 die Abtaststrahlen mehrerer Lichtsender durch eine gemeinsame Sendeoptik geformt und in die gewünschte Richtung abgelenkt.

Nun ist es zwar wünschenswert, die Sende- oder auch die Empfangsoptik für mehrere Strahlen gleichzeitig zu verwenden. Dabei werden aber widersprüchliche Anforderungen an die Optik gestellt. Sie soll einerseits aus Kostengründen möglichst einfach sein, andererseits aber in einem möglichst großen Bildfeld alle Strahlen gleichzeitig scharf abbilden.

Eine einfache Optik lässt sich mit Hilfe einer Einzellinse realisieren. Damit ist aber unter den gegebenen Randbedingungen einer ausreichend großen Apertur beispielsweise mit Blendenzahl $k \leq 3$ und kleinen Punktbildern nur ein kleiner Bildfeldwinkelbereich von höchstens $\pm 5°$ möglich. Folglich können mit einer Einzellinse nur dicht liegende Abtaststrahlen realisiert werden. Bei einem sinnvollen gegenseitigen Abstand von einigen Grad und den genannten Bildfeldwinkeln von $<5°$ ermöglicht eine Einzellinse nicht mehr als zwei oder drei Abtaststrahlen und damit keine größeren Messbereiche von beispielsweise 30°.

Andererseits besteht auch die Möglichkeit, auf eine einfache Optik zu verzichten und ein mehrlinsiges Objektiv zu verwenden. Damit können kleine Punktbilder auch über einen größeren Bildfeldwinkel von beispielsweise $\pm 20°$ erzeugt werden. Allerdings sind dazu in aller Regel mindestens drei Linsen erforderlich, die auch in sich justiert werden müssen.

Selbst wenn die höheren Herstell- und Justagekosten in Kauf genommen werden, müssen auch noch optische Kompromisse geschlossen werden. Während mit Einzellinsen für ein Bildfeld im Wesentlichen nur bei 0° längs der optischen Achse Blendenzahlen von $k = 1$ erreichbar sind, ist mit Objektiven für ein großes Bildfeld von beispielsweise $\pm 15°$ eine Blendenzahl von $k \leq 3$ oder gar $k \leq 2$ nur schwer erzielbar. Mit einer verkleinerten Empfangsapertur reduziert sich jedoch die Reichweite des Gerätes. Ein weiterer Nachteil eines mehrlinsigen Objektivs besteht darin, dass der Hauptstrahl an der Bildebene mit einem recht großen Winkel eintrifft. Falls ein solches Objektiv als Sendeoptik eingesetzt werden soll, so wird es erforderlich, die Lichtquellen zu verkippen, um das Objektiv überhaupt zu treffen. Die Alternative eines telezentrischen Objektivs, bei dem der Hauptstrahlwinkel sehr klein bleibt, kommt deshalb nicht in Betracht, weil das dann noch deutlich mehr als drei Linsen erfordert.

Die US 2006/0187470 A1 offenbart ein optisches metrologisches System zur Vermessung einer Antenne eines Weltraumfahrzeugs. Mittels Strahlteiler wird Empfangslicht zugleich einem entfernungsmessenden System und einem XY-Positionsmesssystem zugeführt. In einer Ausführungsform wird als Empfangsoptik ein Teleskopobjektiv aus zwei Linsen eingesetzt. In einer anderen Ausführungsform ist ein kreisförmiges Array von PDS-Elementen vorgesehen.

Die CN 107861317 A offenbart eine Projektionslinse aus zwei Linsen, die ein mit einem DOE erzeugtes Lichtmuster für eine 3D-Bilderfassung projiziert.

Es ist daher Aufgabe der Erfindung, ein gattungsgemäßes Mehrstrahlsystem zu vereinfachen und zu verbessern.

Diese Aufgabe wird durch einen optoelektronischen Sensor und ein Verfahren zur Erfassung von Objekten in einem Überwachungsbereich nach Anspruch 1 beziehungsweise 9 gelöst. Der erfindungsgemäße Sensor ist ein Mehrfachtaster, der mit mindestens einem Lichtsender mehrere Lichtstrahlen von jeweils einem Sendepunkt aussendet.

Jeder Sendepunkt ist effektiv ein Lichtsender, von dem der jeweilige ausgesandte Lichtstrahl ausgeht, wobei aber zunächst nicht zwingend erforderlich ist, dass an den Sendepunkten physische Lichtsender sitzen. Stattdessen kann in einigen Ausführungsformen auch ein physischer Lichtsender mehrere ausgesandte Lichtstrahlen an mehreren oder allen Sendepunkten erzeugen, wie später noch erläutert wird. Die ausgesandten Lichtstrahlen sind weiterhin nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen.

Mindestens ein Lichtempfänger ist in der Lage, ein jeweiliges Empfangssignal aus den aus unterschiedlicher Richtung remittierten Lichtstrahlen zu erzeugen, die an den Objekten zurückgeworfen werden und in einem jeweiligen Empfangspunkt auftreffen. Ähnlich den Ausführungen zu den Sendepunkten sind die Empfangspunkte effektiv Lichtempfänger, ohne dass physisch an jedem Empfangspunkt ein Lichtempfänger sitzen muss. Die derart erzeugten Empfangssignale werden ausgewertet, um Informationen über das Objekt zu gewinnen.

Die ausgesandten Lichtstrahlen durchlaufen eine Sendeoptik, die beispielsweise dafür sorgt, dass die ausgesandten Lichtstrahlen eine gewünschte Strahlform, eine klare Separation voneinander oder bestimmte Strahlrichtungen aufweisen. Dabei ist nur eine Sendeoptik für alle Lichtstrahlen aller Sendepunkte vorgesehen. Es ist allerdings denkbar, für einen Sensor mit sehr vielen Strahlen mehrere Module zu kombinieren, die jeweils mehrere Sendepunkte und nur eine Sendeoptik aufweisen. Entsprechendes gilt für die remittierten Lichtstrahlen und deren gemeinsame Empfangsoptik.

Die Erfindung geht von dem Grundgedanken aus, als Sende- und/oder Empfangsoptik ein zweilinsiges Objektiv für ein kreisförmiges Bildfeld mit Bildfeldwinkel $\alpha$ einzusetzen. Ein zweilinsiges Objektiv umfasst genau zwei Linsen, also eine erste Linse und eine zweite Linse und keine weitere Linse, wobei es sich insbesondere um Sammellinsen handelt. Die erste Linse ist so geformt, dass einfallende Lichtbündel für jeden einzelnen Bildpunkt beziehungsweise Sende- und/oder Empfangspunkt mit Bildfeldwinkel $\alpha$ nur jeweils eine Hälfte der zweiten Linse treffen. Derartige Lichtbündel, und zwar vorzugsweise alle Lichtbündel mit Bildfeldwinkel $\alpha$, befinden sich also auf Höhe der zweiten Linse nur auf je einer Seite der optischen Achse. Lichtbündel von bezüglich der optischen Achse gegenüberliegenden Feldpunkten überschneiden einander in der Ebene der zweiten Linse nicht. Sie beleuchten den Mittelpunkt der zweiten Linse gerade so nicht mehr. Im Unterschied zu üblichen Objektiven wird hier also kein großer zusammenhängender Bereich an Bildfeldwinkeln genutzt, wie beispielsweise - $\alpha$ ...0°... $\alpha$, sondern nur ein einzelner diskreter Bildfeldwinkel a. Der Bildfeldwinkel $\alpha$ kann eine gewisse Toleranzumgebung einschließen, innerhalb derer diese Eigenschaften immer noch ausreichend erfüllt sind.

Die Erfindung hat den Vorteil, dass mit dem speziellen zweilinsigen Objektivdesign nützliche Eigenschaften sowohl einer Einzellinse als auch eines Objektivs vereint werden. Ein Zweilinser ist natürlich einfacher zu produzieren und zu justieren als ein Dreioder Mehrlinser. Die Designfreiheitsgrade sind dafür an sich beschränkter, werden aber erfindungsgemäß so ausgenutzt, dass trotz des geringeren Aufwands mehrere Abtaststrahlen über ein größeres Bildfeld scharf abgebildet werden. Feldwinkel von beispielsweise $\pm 20°$ sind möglich, ohne die Punktbilder zu vergrößern, die eine Anforderung wie <0.5 mrad erfüllen. Somit werden viele zueinander beabstandete Strahlen mit derselben Optik möglich, diesbezüglich ist die Leistungsfähigkeit nicht geringer als bei einem Drei- oder Mehrlinser. Das gelingt, indem nicht überall scharf begrenzte Strahlen gefordert werden, sondern nur auf einem Kreisring entsprechend dem Bildfeldwinkel a. Das zweilinsige Objektiv ermöglicht aber anders als mehrlinsige Objektive immer noch eine große Apertur mit $k \leq 2$ oder sogar $k = 1$, also eine kleine Blendenzahl und damit eine große Apertur und eine große Reichweite. Es ist sogar möglich, den Hauptstrahlwinkel in der Bildebene sehr klein zu halten, somit ein nahezu bildseitig telezentrisches Objektiv zu designen. Beim Einsatz im Sendepfad müssen dann die Strahlquellen nicht verkippt werden, sondern können flach auf einer Leiterplatte aufgelötet werden.

Es ist für das zweilinsige Objektiv die Ungleichung $d \geq (D1*f1)/(D1+2*f1*\tan \alpha)$ erfüllt, mit Brennweite f1 und Durchmesser D1 der ersten Linse und Abstand d zwischen erster Linse und zweiter Linse. Der Abstand d wird hier bevorzugt zwischen der Hauptebene der ersten Linse und der ersten wirksamen Linsenfläche der zweiten Linse gemessen, also der Linsenfläche, die der ersten Linse zugewandt ist. Das ist eine mathematische Formulierung für die bereits vorgestellte Bedingung, dass Lichtbündel mit Bildfeldwinkel $\alpha$ nur eine Hälfte der zweiten Linse treffen.

Es gilt vorzugsweise sogar zumindest annähernd Gleichheit, d.h. $d = (D1*f1)/(D1+2*f1*\tan \alpha)$. Zumindest annähernd bedeutet, dass noch eine gewisse Toleranz von beispielsweise 5 % oder 10 % möglich ist, die Eigenschaften der Optik verändern sich nicht sprunghaft. Vielmehr geht es darum, noch unter der Bedingung der Ungleichung einen möglichst großen Abstand der zweiten Linse zur Bildebene der Optik einzuhalten, damit die zweite Linse auch noch eine spürbare Wirkung entfalten kann. Dabei ist die Gleichheit ein Optimum in dem Sinne, dass dieser Abstand maximiert ist, und dieses Optimum kann auch nur annähernd mit der genannten Toleranz erreicht werden.

Die Brennweite f2 der zweiten Linse entspricht vorzugsweise dem Abstand zwischen erster Linse und zweiter Linse. Das zweilinsige Objektiv wird dann bildseitig telezentrisch. Das ermöglicht unter anderem, wie bereits angesprochen, beim Einsatz als Sendeoptik die Strahlquellen parallel zueinander auszurichten. Der Abstand zwischen erster Linse und zweiter Linse ist an dieser Stelle vorzugsweise nicht der schon eingeführte Abstand d, sondern der um circa die halbe Mittendicke der zweiten Linse abweichende Abstand d' zwischen den Hauptebenen beider Linsen. Das muss aber so nicht zwingend eingehalten werden. Ähnlich wie im Vorabsatz diskutiert, bringt auch bereits eine Brennweite f2 annähernd gleich dem Abstand zwischen erster und zweiter Linse Vorteile mit sich, das zweilinsige Objektiv ist dann zumindest nahezu bildseitig telezentrisch, und zumindest eine Toleranz im Rahmen der halben Mittendicke kann durchaus noch hinnehmbar sein.

Die erste Linse weist bevorzugt eine kleine Blendenzahl k1 auf, insbesondere k1 = 1. Es ist ein Vorteil des zweilinsigen Objektivs gegenüber mehrlinsigen Objektiven, dass dies überhaupt möglich ist. Diese Wahl von k1 resultiert auch in einem kleinen Wert k für die Blendenzahl des gesamten Objektivs. Mit einer derart kleinen Blendenzahl ist ein besonders empfindlicher und langreichweitiger Sensor umsetzbar.

Es sind die Sendepunkte auf einer ersten Kreislinie und/oder die Empfangspunkte auf einer zweiten Kreislinie angeordnet. Die Kreisringe entsprechen dem Bildfeldwinkel a, auf den das zweilinsige Objektiv ausgelegt ist. Bei dieser zueinander passenden Anordnung von Sende- beziehungsweise Empfangspunkten und zweilinsigem Objektiv werden gerade dessen optimierten Eigenschaften genutzt, während dafür womöglich in Kauf genommene Designeinbußen für andere Bildfeldwinkel gar keine Auswirkung mehr haben. Eine Kreisanordnung von Sende- beziehungsweise Empfangspunkten erscheint insbesondere für einen Laserscanner auf den ersten Blick widersinnig, da dort eine eindimensionale Anordnung auf einer einfachen Linie genügen würde, mit der dann durch die Drehbewegung eine Ebenenschar abgetastet wird. Die Linie ließe sich aber im Gegensatz zu einem Kreisring nicht mit der erfindungsgemäß hohen Qualität über den geforderten großen Bildbereich durch ein zweilinsiges Objektiv abbilden. Außerdem ist es auch mit zu einer Kreislinie angeordneten Sende- beziehungsweise Empfangspunkten möglich, in einem Laserscanner äquidistant angeordnete Ebenen abzutasten, da der Versatz in Rotationsrichtung des Laserscanners nur einen erforderlichenfalls auch kompensierbaren Zeitversatz der Messung bewirkt.

Die erste Kreislinie ist bevorzugt um die optische Mittelachse der Sendeoptik und/oder die zweite Kreislinie um die optische Mittelachse der Empfangsoptik zentriert. Anders ausgedrückt verlaufen die optischen Mittelachsen der jeweiligen Optik durch den Kreismittelpunkt der Kreislinie. Dann erfahren bei rotationssymmetrischen Eigenschaften der Optik die Lichtstrahlen jeweils die gleichen Strahlformungs- und Ablenkungseffekte.

Die Sendepunkte sind bevorzugt gleichmäßig auf der ersten Kreislinie und/oder die Empfangspunkte gleichmäßig auf der zweiten Kreislinie verteilt. Eine solche gleichmäßige Anordnung, bei dem die Sendepunkte beziehungsweise Empfangspunkte ein regelmäßiges n-Eck bilden, ist einfacher zu handhaben, insbesondere um gleiche Winkelabstände zwischen den Abtaststrahlen zu erhalten. Es bleibt aber auch eine unregelmäßige Verteilung auf der Kreislinie möglich, und dies schließt keineswegs aus, dennoch gleiche Winkelabstände zwischen den Abtaststrahlen einzustellen.

Vorzugsweise sind drei oder mehr Sende- beziehungsweise Empfangspunkte vorgesehen. Als besonders vorteilhaft sind fünf, sechs, acht oder sechzehn zu nennen. Bei der Anzahl vier sind vorzugsweise die Sendepunkte und/oder die Empfangspunkte nicht zu einem Quadrat oder Rechteck angeordnet. Es sei wiederholt, dass sich die Anzahl auch auf ein Sende-/Empfangsmodul beziehen kann, von denen mehrere in einem optischen Sensor verbaut sein können. Die Gesamtzahl von Abtaststrahlen addiert sich dann aus den Anzahlen der verbauten Module, und so lassen sich weitere Anzahlen konstruieren.

Der Sensor weist bevorzugt eine Vielzahl von Lichtsendern oder Lichtquellen, insbesondere einen Lichtsender je Sendepunkt, und/oder eine Vielzahl von Lichtempfängern oder Lichtempfangselementen auf, insbesondere einen Lichtempfänger je Empfangspunkt. Die ausgesandten Lichtstrahlen werden also zumindest teilweise, wenn nicht alle, unmittelbar durch eigene Lichtsender an den Sendepunkten erzeugt, und entsprechendes gilt für die remittierten Lichtstrahlen, Empfangspunkte und Lichtempfänger.

Dem Lichtsender ist bevorzugt ein Strahlteilerelement zugeordnet, um dessen Licht in mehrere ausgesandte Lichtstrahlen aufzuspalten. So ist ein einziger physischer Lichtsender für mehrere oder sogar alle Sendepunkte zuständig. Denkbar ist auch, das Licht mehrerer physischer Lichtsender aufzuspalten, beispielsweise sechs Sendepunkte aus zwei Lichtsendern mit dreifach aufgespaltenem Lichtstrahl zu erhalten.

Der Lichtempfänger ist bevorzugt ortsaufgelöst und weist mehrere aktive Bereiche an den Empfangspunkten auf. In dieser Ausführungsform ist derselbe Lichtempfänger für mehrere oder sogar alle Empfangspunkte zuständig. Dafür weist der Lichtempfänger insbesondere eine Pixelmatrix auf, und nur das oder die Pixel an den Empfangspunkten werden genutzt, um ein Empfangssignal zu gewinnen. Die übrigen Pixel erzeugen möglicherweise auch Signale, die aber ignoriert oder nicht ausgelesen werden. Es ist auch denkbar, solche Pixel ganz zu deaktivieren, etwa in einer SPAD-Matrix (Single-Photon Avalanche Diode) gezielt nur die Pixel an den Empfangspunkten oberhalb der Durchbruchspannung vorzuspannen.

Lichtsender und Lichtempfänger bilden bevorzugt eine koaxiale Anordnung, und Sendeoptik und Empfangsoptik sind in einer gemeinsamen Optik zusammengefasst. Das ergibt einen besonders kompakten Aufbau. Es gibt dann insgesamt nur ein zweilinsiges Objektiv als gemeinsame Optik, die in einer Doppelrolle als Sende- und Empfangsoptik fungiert.

Der Sensor ist als Laserscanner ausgebildet und weist eine bewegliche Ablenkeinheit auf, mit deren Hilfe die ausgesandten Lichtstrahlen periodisch durch den Überwachungsbereich geführt werden. Wie einleitend erläutert, tastet der Laserscanner mit der Bewegung der beweglichen Ablenkeinheit den Überwachungsbereich in mehreren Ebenen ab. Durch das große Bildfeld des zweilinsigen Objektivs wird ein größerer Ebenenabstand beziehungsweise ein größerer von den Abtastebenen insgesamt abgedeckter Raumwinkelbereich in Elevation ermöglicht. Die Ablenkeinheit ist vorzugsweise in Form einer drehbaren Abtasteinheit ausgebildet, die praktisch einen beweglichen Messkopf bildet, in dem zumindest der Lichtsender samt gemeinsamer Sendeoptik und möglicherweise auch Lichtempfänger und zumindest Teile der Auswertungseinheit untergebracht sind.

Die Auswertungseinheit ist bevorzugt dafür ausgebildet, aus einer Lichtlaufzeit zwischen Aussenden der Lichtstrahlen und Empfangen der remittierten Lichtstrahlen einen Abstand der Objekte zu bestimmen. Der Sensor wird dadurch entfernungsmessend. Alternativ wird lediglich die Anwesenheit eines Objekts festgestellt und beispielsweise als Schaltsignal ausgegeben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1      eine schematische Schnittdarstellung eines Laserscanners;
Fig. 2a    eine schematische Ansicht einer kreisförmigen Anordnung von Bildfeldpunkten;
Fig. 2b    eine schematische Ansicht einer linearen Anordnung von Bildfeldpunkten;
Fig. 2c    eine schematische Ansicht einer kreisringförmigen Anordnung von Bildfeldpunkten;
Fig. 3      eine Draufsicht auf kreisförmig angeordnete Sende- beziehungsweise Empfangspunkte;
Fig. 4      eine schematische Ansicht eines zweilinsigen Objektivs für ein kreisringförmiges Bildfeld mit beispielhaften Strahlenverläufen; und
Fig. 5      eine schematische Draufsicht auf die zweite Linse des Objektivs gemäß Figur 4 zur Veranschaulichung der optischen Wirkung der ersten Linse.

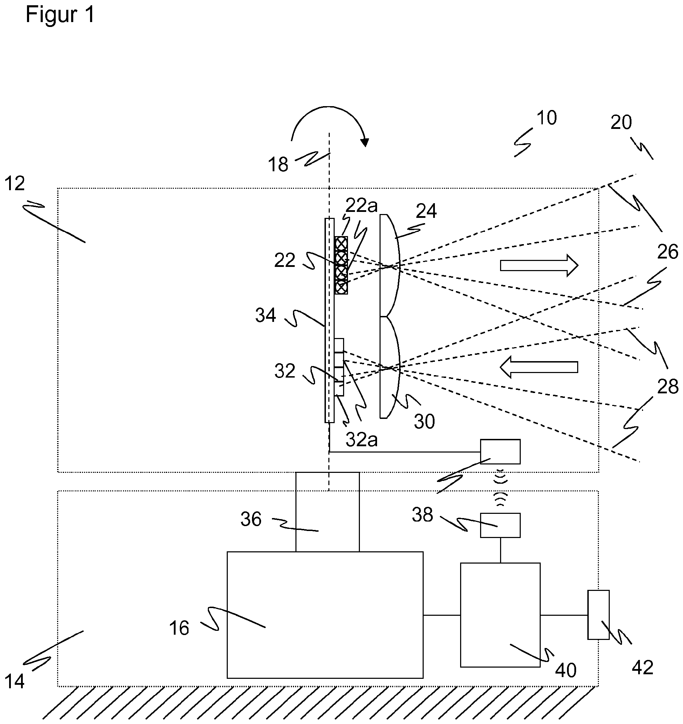

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugt ein Lichtsender 22 mit mehreren Lichtquellen 22a, beispielsweise LEDs oder Laser in Form von Kantenemittern oder VCSELs, mit Hilfe einer gemeinsamen Sendeoptik 24 mehrere Sendelichtstrahlen 26 mit gegenseitigem Winkelversatz, die in den Überwachungsbereich 20 ausgesandt werden. Treffen die Sendelichtstrahlen 26 in dem Überwachungsbereich 20 auf ein Objekt, so kehren entsprechende remittierte Lichtstrahlen 28 zu dem Sensor 10 zurück. Die remittierten Lichtstrahlen 28 werden von einer gemeinsamen Empfangsoptik 30 auf einen Lichtempfänger 32 mit mehreren Lichtempfangselementen 32a geführt, die jeweils ein elektrisches Empfangssignal erzeugen. Die Lichtempfangselemente 32a können separate Bauteile oder Pixel einer integrierten Matrixanordnung sein, beispielsweise Photodioden, APDs (Avalanche Diode) oder SPADs (Single-Photon Avalanche Diode).

Die rein beispielhaft vier Lichtquellen 22a und Lichtempfangselemente 32a sind in der Schnittansicht übereinander dargestellt. Tatsächlich ist zumindest eine der Gruppen in bevorzugten Ausführungsformen der Erfindung in einer Kreisfigur beziehungsweise auf einer Kreislinie angeordnet, wie dies weiter unten noch erläutert wird. Das muss sich aber nicht auf physische Lichtquellen 22a und Lichtempfangselemente 32a beziehen, sondern nur auf die hier allerdings damit übereinstimmenden effektiven Sendepunkte als Ausgangspunkte der Sendelichtstrahlen 26 und Empfangspunkte als Endpunkte der remittierten Lichtstrahlen 28. Es ist abweichend von Figur 1 denkbar, mit einer physischen Lichtquelle mehrere Sendepunkte zu erzeugen beziehungsweise mehrere Empfangspunkt auf demselben physischen Empfangsbaustein unterzubringen.

Lichtsender 22 und Lichtempfänger 32 sind in der in Figur 1 gezeigten Ausführungsform gemeinsam auf einer Leiterkarte 34 angeordnet, die auf der Drehachse 18 liegt und mit der Welle 36 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 32 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 38 verbindet die bewegliche Abtasteinheit 12 mit der ruhenden Sockeleinheit 14. Dort befindet sich eine Steuer- und Auswertungseinheit 40, die zumindest teilweise auch auf der Leiterkarte 34 oder an anderem Ort in der Abtasteinheit 12 untergebracht sein kann. Die Steuer- und Auswertungseinheit 40 steuert den Lichtsender 22 und erhält die Empfangssignale des Lichtempfängers 32 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 28 und dessen Erfassung in einem der Lichtempfangselemente 32a ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 42 ausgegeben werden. Die Sensorschnittstelle 42 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 42 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Dabei kann nicht nur ein Sende-Empfangsmodul mitrotieren wie hier dargestellt, es sind weitere derartige Module mit Höhenversatz oder einem Winkelversatz bezüglich der Drehachse 18 vorstellbar. Alternativ ist auch eine periodische Ablenkung mittels Drehspiegel oder einem Facettenspiegelrad denkbar. Bei mehreren Sendelichtstrahlen 26 ist dabei zu beachten, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen.

Auch die Ausführung als Laserscanner ist beispielhaft. Es ist auch ein Mehrfachtaster ohne periodische Bewegung möglich, der dann praktisch nur aus der ruhenden Abtasteinheit 12 mit entsprechender Elektronik, jedoch ohne Sockeleinheit 14 besteht, insbesondere als Variante eines Flash-LiDARs.

Während der Rotation des Sensors 10 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Kegelmantelflächen werden hier manchmal vereinfachend als Abtastebenen bezeichnet.

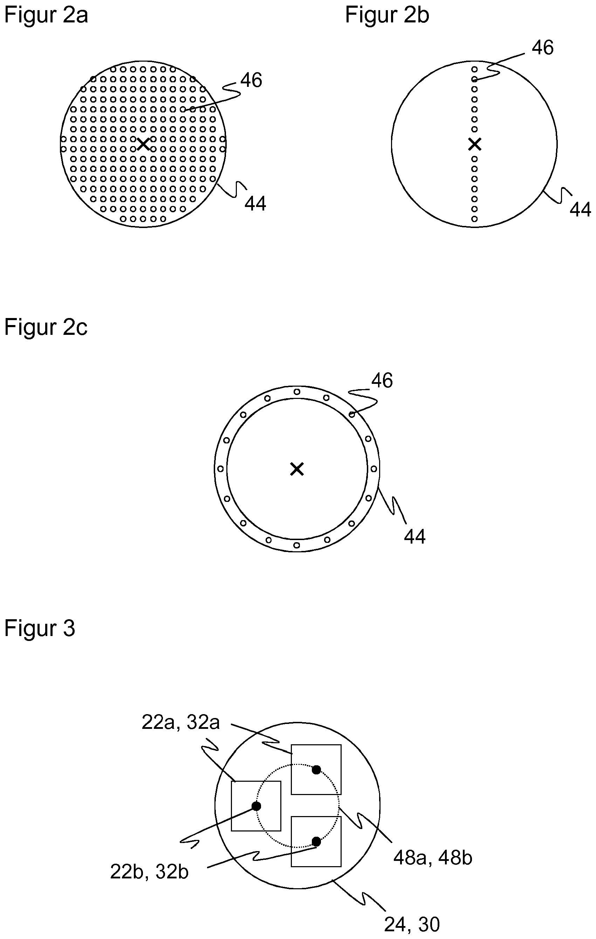

Erfindungsgemäß sind Sendeoptik 24 und/oder Empfangsoptik 30 für ein kreisringförmiges Bildfeld mit Bildfeldwinkel $\alpha$ ausgelegt. Die Motivation dafür soll anhand der Figuren 2a-c erläutert werden.

Im Idealfall sollte die Optik 24, 30 wie in Figur 2a innerhalb des Bildkreises 44 sämtliche Bildfeldpositionen 46 scharf abbilden. Nach der einleitenden Diskussion leistet das eine Einzellinse aber nur für einen sehr kleinen Bildkreis 44, während ein entsprechendes Objektiv zu aufwändig wäre und zudem andere optische Einschränkungen mit sich brächte.

Für einen Laserscanner ist nicht unbedingt eine flächenhafte Abbildung erforderlich, da Abtastebenen mit gegenseitigem Versatz in Elevation bereits durch eine lineare Anordnung von Lichtquellen 22a und Lichtempfangselementen 32a entstehen. Dafür würde eine Optik genügen, die auf einer linearen Anordnung von Bildfeldpositionen 46 wie in Figur 2b für eine scharfe Abbildung sorgt. Auch das ist aber für größere Bildkreise 44 nur mit einem aufwändigen Objektiv möglich.

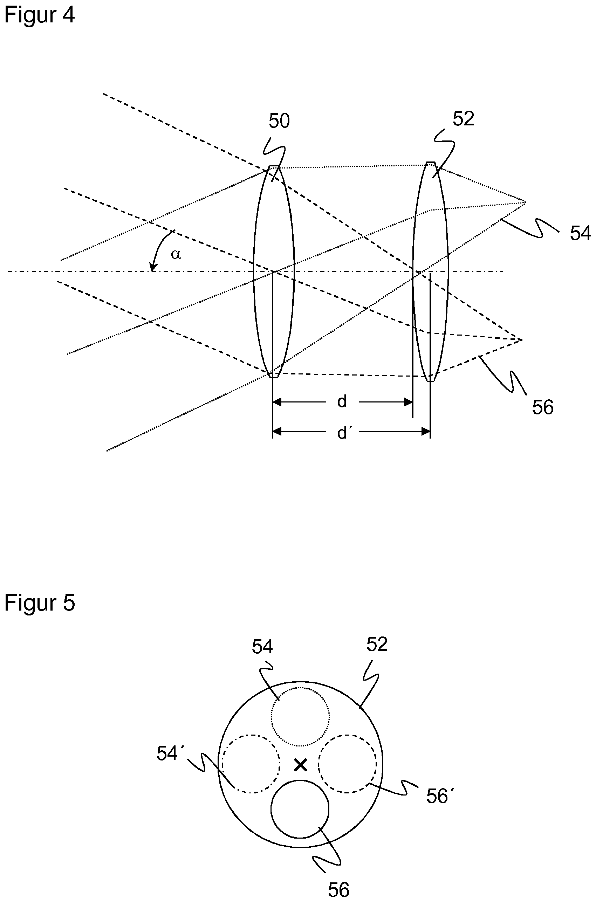

Stattdessen wird die scharfe Abbildung nur für einen einzigen Bildfeldwinkel $\alpha$ gefordert, wie dies in Figur 2c dargestellt ist, wo der Ring der Bildfeldpositionen 46 dem Bildfeldwinkel $\alpha$ entspricht. Das Optikdesign wird vorzugsweise an dem festen Bildfeldwinkel $\alpha$ ausgerichtet, was nicht ausschließt, dass die Abbildung auch in einer gewissen Umgebung noch scharf ist, für abweichende und insbesondere kleinere Bildfeldwinkel ist dies aber keine Designanforderung mehr. Der Bildfeldwinkel $\alpha$ mit einem gewissen Toleranzband einer ausreichend scharfen Abbildung ist in Figur 2c möglichst groß, beispielsweise a=$\pm$15°, um möglichst große Abstände zwischen den Strahlen 26, 28 des Sensors 10 zu erhalten. Bereits mit einer Einzellinse lässt sich durch diese Beschränkung auf ein kreisringförmiges Bildfeld eine gewisse Verbesserung des abgedeckten Winkels beispielsweise bis auf $\pm$8° erreichen. Das wird mit der später anhand der Figuren 4 und 5 erläuterten erfindungsgemäßen Auslegung der Optik 24, 30 aber noch deutlich weiter verbessert.

Figur 3 zeigt in einer Draufsicht eine bevorzugte Anordnung der Lichtquellen 22a beziehungsweise der Lichtempfangselemente 32a auf einer Kreislinie 48a-b. Vorzugsweise durchstößt wie dargestellt die optische Mittelachse der Optik 24, 30 den Mittelpunkt der Kreislinie 48a-b. Die Figur 3 kann je nach Ausführungsform den Sendepfad und/oder den Empfangspfad betreffen, deshalb sind die Bezugszeichen doppelt eingezeichnet.

Aufgrund der Anordnung auf der Kreislinie 48a-b wird von den Optiken 24, 30 effektiv nur das kreisringförmige Bildfeld entsprechend dem Bildfeldwinkel $\alpha$ verwendet. Deshalb ist diese Anordnung besonders vorteilhaft, es werden genau die optimierten Bereiche der Optiken 24, 30 ausgenutzt. Abbildungsfehler der Optiken 24, 30 für von $\alpha$ abweichende Bildfeldwinkel sind praktisch nicht relevant.

Im Zusammenhang mit Figur 1 wurde schon kurz auf den Unterschied zwischen einer Lichtquelle 22a und einem Sendepunkt 22b eingegangen. Ein Sendepunkt 22b ist der Ausgangspunkt eines Sendelichtstrahls 26. Das kann zugleich der Ort einer physischen Lichtquelle 22a sein. Zum einen weist aber eine Lichtquelle 22a als Halbleiterbauteil auch eine gewisse, hier quadratische Grundfläche auf, die größer ist als die Emissionsfläche selbst. Außerdem ist es möglich, mit ein und derselben physischen Lichtquelle 22a Sendelichtstrahlen aus mehreren Sendepunkten 22b zu erzeugen. Natürlich sind die Sendepunkte 22b strenggenommen keine mathematischen Punkte, sondern haben eine endliche Ausdehnung, so dass nur ein Teil und insbesondere die Mittelpunkte auf der Kreislinie 48a-b angeordnet werden kann. Die Ausführungen zu Sendepunkten 22b gelten entsprechend für Empfangspunkte 32b. Für die optischen Eigenschaften des Sensors 10 ist letztlich die Anordnung der Sendepunkte 22b beziehungsweise Empfangspunkte 32b relevant, nicht diejenige von Lichtsender 22, Lichtquellen 22a, Lichtempfänger 26 oder Lichtempfangselementen 32a.

In der Ausführungsform nach Figur 1 wird jeder Sendepunkt 22b durch eine eigene Lichtquelle 22a und jeder Empfangspunkt 32b durch ein eigenes Lichtempfangselement 32a verwirklicht. Davon kann alternativ auf verschiedenste Weise abgewichen werden. Dieselbe Lichtquelle 22a kann durch ein Strahlteilerelement oder dergleichen Sendelichtstrahlen 26 aus mehreren oder sogar allen Sendepunkten 22b erzeugen. Die Lichtquelle 22a kann mechanisch bewegt werden, um nacheinander Sendelichtstrahlen 26 aus mehreren oder sogar allen Sendepunkten 22b zu erzeugen. Der Sendelichtstrahl 26 kann auch ohne mechanische Bewegung der Lichtquelle 22a die Kreislinie 48a oder einen Teil davon abfahren, etwa mittels MEMS-Spiegel, optical phased array oder akusto-optischem Modulator.

Mehrere Empfangspunkte 32b wiederum können ebenso durch separate Lichtempfangselemente 32a wie durch Pixel oder Pixelbereiche einer integrierten Mehrfachanordnung von Lichtempfangselementen 32a erreicht werden. Auch auf Empfangsseite ist eine mechanische Bewegung eines Lichtempfangselements 32a längs der Kreislinie 48b oder eines Teils davon oder eine entsprechende Ablenkung der remittierten Lichtstrahlen 28 mittels bewegtem MEMS-Spiegel oder dergleichen denkbar. In einer weiteren Ausführungsform wird das Empfangslicht mehrerer oder aller Empfangspunkte 32b auf ein gemeinsames Lichtempfangselement geführt. Um dennoch die Identität des jeweiligen remittierten Lichtstrahls 28 feststellen zu können, ist ein Multiplexing mit sequentieller Aktivierung von Sendelichtstrahlen 26 oder über eine zeitliche Codierung der Mehrfachpulsfolge der Sendestrahlen möglich.

Figur 3 zeigt ein Beispiel mit drei Sendepunkten 22b beziehungsweise Empfangspunkten 32b, die gleichmäßig über die Kreislinie 48a-b verteilt sind. Abweichend sind diverse Anzahlen 3, 4, 5, 6, 7, 8, ...16 und mehr auch in unregelmäßiger Anordnung vorstellbar.

Figur 4 zeigt eine schematische Darstellung eines zweilinsigen Objektivs mit einer ersten Linse 50 und einer zweiten Linse 52, wobei beide Linsen 50, 52 vorzugsweise Sammellinsen sind. Dieses Objektiv kann als Sendeoptik 24 und/oder als Empfangsoptik 32 eingesetzt werden. Oben zu Figur 2 wurde erläutert, dass mit einer auf ein kreisringförmiges Bildfeld optimierten Einzellinse Bildfeldwinkel von bis zu $\pm 8°$ möglich sind. Das zweilinsige Objektiv verbessert dies erheblich auf $\pm 20°$ und mehr.

In Figur 4 sind zwei beispielhafte, bezüglich der optischen Achse einander gegenüberliegende Lichtbündel 54, 56 eingezeichnet, die dem Bildfeldwinkel $\alpha$ entsprechen. Auf diesen Bildfeldwinkel $\alpha$ und das dadurch bestimmte kreisringförmige Bildfeld ist das zweilinsige Objektiv optimiert.

Die erste Linse 50 verringert den Strahldurchmesser der Lichtbündel 54, 56 auf einen Querschnitt, der maximal noch halb so groß ist wie beim Eintritt in die erste Linse 50. Dieser verkleinerte Querschnitt trifft dann nur noch eine Hälfte der zweiten Linse 52. Dadurch wird die zweite Linse 52 an einer gegebenen Stelle immer nur von Licht aus einem Feldpunkt beleuchtet, nicht aber von dem bezüglich der optischen Achse gegenüberliegenden Feldpunkt.

Figur 5 illustriert diese optischen Eigenschaften des zweilinsigen Objektivs noch einmal in einer Draufsicht auf die zweite Linse 52. Lichtbündel 54, 56 und 54', 56' von gegenüberliegenden Feldpunkten überschneiden sich nicht und erreichen nicht die jeweils bezüglich der optischen Achse andere Hälfte der zweiten Linse 52. Seitlich benachbarte Feldpunkte dürfen auch zu einem gewissen Überlapp führen. Der Mittelpunkt der zweiten Linse 52 bleibt unbeleuchtet.

Diese qualitativ erläuterten Eigenschaften können auch genauer anhand der Parameter des zweilinsigen Objektivs angegeben werden. Gesucht ist derjenige Abstand d zwischen der Hauptebene der ersten Linse 50 und der ersten optisch aktiven Fläche der zweiten Linse 52, bei dem alle Strahlen eines Lichtbündels 54, 56 zu einem Feldpunkt vollständig auf einer Seite bezüglich der optischen Achse angekommen sind.

Der Hauptstrahl des Lichtbündels 50, 52 durch die Mitte der ersten Linse 50 hat bei variabel gedachtem d einen Seitenversatz von $\tan \alpha * d$, und der relevante Randstrahl hat noch einen zusätzlichen Seitenversatz von $(D1/2)/f1 * d$,

wobei D1 der genutzte Durchmesser und f1 die Brennweite der ersten Linse 50 sind. Insgesamt soll der Seitenversatz den Randstrahl über die optische Achse hinausbringen. Dafür ist ein Seitenversatz von D1/2 nötig. Also muss folgende Ungleichung erfüllt werden:

$$[(D1/2)/f1 + \tan \alpha] * d \geq D1/2,$$

und das lässt sich umformen zu

$$d \geq (D1*f1)/(D1+2*f1*\tan \alpha).$$

Dabei ist es vorteilhaft, für d einen Zahlenwert zumindest in der Nähe der Gleichheit zu wählen. Je größer der verbleibende Unterschied in der Ungleichung, desto eher kommt die zweite Linse 52 in unmittelbare Nähe zur Bildebene, und dort kann sie kaum noch eine nützliche Wirkung entfalten.

Die beiden Linsen 50, 52 können plan-konvex, konvex-plan, bi-konvex und womöglich auch konvex-konkav oder konkav-konvex ausgeführt sein, in den beiden letzten Fällen jedoch weiterhin als Sammellinse. Es sind klassische brechende Linsen, Fresnel-Linsen oder als beugende beziehungsweise diffraktive Optiken sowie Kombinationen davon möglich. Die beiden Linsen 50, 52 können voneinander in diesen allgemeinen Formgebungseigenschaften und Wirkprinzipen abweichen oder übereinstimmen. Die beiden Linsen 50, 52 können unterschiedliche Brennweiten f1, f2, unterschiedliche Durchmesser D1, D2 und unterschiedliche Formen aufweisen.

In einer vorteilhaften Ausführungsform wird nicht nur der Abstand zwischen den beiden Linsen 50, 52 anhand der oben angegebenen Ungleichung gewählt, sondern auch noch die Wahl f2=d' getroffen. Dabei ist d' der Abstand zwischen den Hauptebenen der Linsen 50, 52, der etwas größer ist als der Abstand d, je nach Mittendicke der zweiten Linse 52.

Mit dieser Brennweite f2 wird die vordere Brennebene der zweiten Linse 52 in die Hauptebene der ersten Linse 50 gelegt. Das hat zur Folge, dass der Hauptstrahl in der Bildebene des Objektives parallel zur optischen Achse läuft, das Objektiv ist dann also bildseitig telezentrisch. Das ermöglicht unter anderem beim Einsatz als Sendeoptik 24, dass die Lichtquellen 22a parallel zueinander ausgerichtet sein dürfen und nicht schräg gestellt werden müssen. Auch bei einer nicht exakten Anpassung der Brennweite f2 an den Abstand d', also nur f2~d' ergeben sich schon Vorteile, weil der bildseitige Hauptstrahlwinkel dann bereits deutlich verkleinert wird, wenn auch nicht bis auf 0°.

Weiter wird bevorzugt der Durchmesser D2 der zweiten Linse 52 nur so groß gewählt, wie es die durchlaufenden Lichtbündel 54, 56 benötigen. Dann ist das zweilinsige Objektiv durch nur drei Parameter vollständig bestimmt: Der Durchmesser D1 und Brennweite f1 der ersten Linse 50 können frei gewählt werden. Der Abstand d der zweiten Linse 52 ergibt sich aus der oben erläuterten Ungleichung. Die Brennweite f2 schließlich wird auf den Abstand d' gesetzt.

Mit an sich bekannten Formeln der geometrischen (paraxialen) Optik lässt sich auch eine Gesamtbrennweite f des Objektives aus diesen nun bekannten Größen berechnen. Umgekehrt kann das zweilinsige Objektiv nur durch seine paraxialen Grundgrößen festgelegt werden: Die Brennweite f des Objektivs, die Apertur D = D1 des Objektivs und den Feldwinkel $\alpha$ des kreisförmigen Bildfeldes.

In einer weiteren bevorzugten Ausführungsform mit einer sehr großen, aber noch realisierbaren Blendenzahl k1 := f1/D1 = 1 der ersten Linse vereinfachen sich die Zusammenhänge auf recht anschauliche Weise:

$$d = f1/(1+2 \tan \alpha),$$

etwa mit $\alpha = 30°$: $d \approx 0.5*f1$,

$$f2 = d' \approx d \approx f1/(1+2 \tan \alpha).$$

Hiermit sind für diese bevorzugte Ausführungsform für jeden gewünschten Feldwinkel $\alpha$ und jede gewünschte Apertur D =D1 alle Brennweiten f1, f2 und Abstände d beziehungsweise d' für das Design des zweilinsigen Objektivs angegeben. Erneut mit den an sich bekannten Formeln für die Berechnung der Gesamtbrennweite zweier kombinierter Linsen können alle diese Werte bei Bedarf auch direkt aus den gewünschten Werten f und D des Objektivs erhalten werden.

Abschließend wird noch ein Zahlenbeispiel angeführt:

| Objektiv-Brennweite | f=19mm |
|---|---|
| Apertur | D = 20mm (Durchmesser der Linse 1) → k = D/f = 1.05 |
| erste Linse | F2-Glas: f1=29.8mm, Mittendicke 4mm, asphärisch konvex-plan |
| zweite Linse | F2-Glas: f2=21.6mm, Mittendicke 5mm, sphärisch konvex-plan |
| Abstand Linsen | d=14.8mm; Abstand zweite Linse zur Bildebene: 4.2mm |
| Bildfeldwinkel | $\alpha = \pm 15.4°$ |
| Spotdurchmesser | 20um (=ca. 1mrad) |

## Patentansprüche

1. Optoelektronischer Sensor (10), ausgebildet als Laserscanner, zur Erfassung von Objekten in einem Überwachungsbereich (20), der mindestens einen Lichtsender (22) zum Aussenden mehrerer voneinander separierter Lichtstrahlen (26) ausgehend von jeweils einem Sendepunkt (22b), eine Sendeoptik (24) für die ausgesandten Lichtstrahlen (26), mindestens einen Lichtempfänger (32) zum Erzeugen eines jeweiligen Empfangssignals aus den von Objekten zurückgeworfenen und in jeweils einem Empfangspunkt (32b) auftreffenden remittierten Lichtstrahlen (28), eine Empfangsoptik (30) für die remittierten Lichtstrahlen (28) und eine Auswertungseinheit (40) zur Gewinnung von Informationen über die Objekte aus den Empfangssignalen aufweist, wobei die Empfangsoptik (30) und/oder die Sendeoptik (24) ein zweilinsiges Objektiv ist, das eine erste Linse (50) und eine zweite Linse (52) aufweist, wobei die Empfangsoptik (30) und/oder die Sendeoptik (24) für ein kreisringförmiges Bildfeld mit Bildfeldwinkel $\alpha$ ausgebildet ist, wobei die erste Linse (50) derart ausgebildet ist, dass Lichtbündel (54, 56) jedes einzelnen Sendepunktes und/oder Empfangspunktes mit Bildfeldwinkel $\alpha$ nur eine Hälfte der zweiten Linse (52) treffen, indem für das zweilinsige Objektiv die Ungleichung d $\geq$ (D1*f1)/(D1+2*f1*tan $\alpha$) erfüllt ist, mit Brennweite f1 und Durchmesser D1 der ersten Linse (50) und Abstand d zwischen erster Linse (50) und zweiter Linse (52) und dass die Sendepunkte (22b) auf einer ersten Kreislinie (48a) und/oder die Empfangspunkte (32b) auf einer zweiten Kreislinie (48b) angeordnet sind.

2. Sensor (10) nach Anspruch 1,
   wobei zumindest annähernd d = (D1*f1)/(D1+2*f1*tan $\alpha$) gilt.

3. Sensor (10) nach einem der vorhergehenden Ansprüche,
   wobei die Brennweite f2 der zweiten Linse (52) dem Abstand zwischen erster Linse (50) und zweiter Linse (52) entspricht.

4. Sensor (10) nach einem der vorhergehenden Ansprüche,
   wobei die erste Linse (50) eine kleine Blendenzahl k1, insbesondere k1 = 1 aufweist.

5. Sensor (10) nach einem der vorhergehenden Ansprüche,
   der eine Vielzahl von Lichtsendern aufweist (22, 22a), insbesondere einen Lichtsender (22, 22a) je Sendepunkt (22b), und/oder der eine Vielzahl von Lichtempfängern (32, 32a) aufweist, insbesondere einen Lichtempfänger (32, 32a) je Empfangspunkt (32b).

6. Sensor (10) nach einem der vorhergehenden Ansprüche,
   wobei Lichtsender (22) und Lichtempfänger (32) eine koaxiale Anordnung bilden und Sendeoptik (24) und Empfangsoptik (30) in einer gemeinsamen Optik zusammengefasst sind.

7. Sensor (10) nach einem der vorhergehenden Ansprüche,
   der eine bewegliche Ablenkeinheit (12) aufweist, mit deren Hilfe die ausgesandten Lichtstrahlen (26) periodisch durch den Überwachungsbereich (20) geführt werden, wobei insbesondere die Ablenkeinheit (12) in Form einer drehbaren Abtasteinheit ausgebildet ist, in welcher der Lichtsender (22) und/oder der Lichtempfänger (32) untergebracht ist.

8. Sensor (10) nach einem der vorhergehenden Ansprüche,
   wobei die Auswertungseinheit (40) dafür ausgebildet ist, aus einer Lichtlaufzeit zwischen Aussenden der Lichtstrahlen (26) und Empfangen der remittierten Lichtstrahlen (28) einen Abstand der Objekte zu bestimmen.

9. Verfahren zur Erfassung von Objekten in einem Überwachungsbereich (20) mittels eines Laserscanners, be dem mehrere voneinander separierte Lichtstrahlen (26) ausgehend von jeweils einem Sendepunkt (22b) durch eine Sendeoptik (24) ausgesandt werden, aus den von den Objekten zurückgeworfenen und nach Durchlaufen einer Empfangsoptik (30) in jeweils einem Empfangspunkt (32b) auftreffenden remittierten Lichtstrahlen (28) ein jeweiliges Empfangssignals erzeugt wird und die Empfangssignale ausgewertet werden, um Informationen über die Objekte zu gewinnen, wobei die Empfangsoptik (30) und/oder die Sendeoptik (24) ein zweilinsiges Objektiv ist, das eine erste Linse (50) und eine zweite Linse (52) aufweist, wobei

die Empfangsoptik (30) und/oder die Sendeoptik (24) für ein kreisringförmiges Bildfeld mit Bildfeldwinkel $\alpha$ ausgebildet ist, und dass aufgrund der Gestaltung der ersten Linse (50) Lichtbündel (54, 56) jedes einzelnen Sendepunktes und/oder Empfangspunktes mit Bildfeldwinkel $\alpha$ nur eine Hälfte der zweiten Linse (52) treffen, indem für das zweilinsige Objektiv die Ungleichung $d \geq (D1*f1)/(D1+2*f1*\tan \alpha)$ erfüllt ist, mit Brennweite f1 und Durchmesser D1 der ersten Linse (50) und Abstand d zwischen erster Linse (50) und zweiter Linse (52) und dass die Sendepunkte (22b) auf einer ersten Kreislinie (48a) und/oder die Empfangspunkte (32b) auf einer zweiten Kreislinie (48b) angeordnet sind.

## Claims

1. An optoelectronic sensor (10), configured as a laser scanner, for detecting objects in a monitoring area (20), comprising at least one light transmitter (22) for transmitting a plurality of mutually separated light beams (26) starting from a respective transmission point (22b), transmission optics (24) for the transmitted light beams (26), at least one light receiver (32) for generating a respective reception signal from the remitted light beams (28) remitted by objects and impinging in a respective reception point (32b), receiving optics (30) for the remitted light beams (28) and an evaluation unit (40) for obtaining information about the objects from the reception signals, wherein the receiving optics (30) and/or the transmission optics (24) are a two-lens objective which comprises a first lens (50) and a second lens (52),

wherein the receiving optics (30) and/or the transmission optics (24) are configured for an annular field of view with field angle $\alpha$, the first lens (50) being configured so that light beams (54, 56) of each individual transmission point and/or reception point with field angle $\alpha$ pass only one half of the second lens (52) in that the inequality $d \geq (D1*f1)/(D1+2*f1*\tan \alpha)$ is satisfied for the two-lens objective, with focal length f1 and diameter D1 of the first lens (50) and distance d between the first lens (50) and the second lens (52), and in that the transmission points (22b) are arranged on a first circular line (48a) and/or the reception points (32b) are arranged on a second circular line (48b).

2. The sensor (10) according to claim 1,
wherein $d = (D1*f1)/(D1+2*f1*\tan \alpha)$ holds at least approximately.

3. The sensor (10) according to any of the preceding claims,
wherein the focal length f2 of the second lens (52) corresponds to the distance between the first lens (50) and the second lens (52).

4. The sensor (10) according to any of the preceding claims,
wherein the first lens (50) has a small aperture number k1, in particular k1 = 1.

5. The sensor (10) according to any of the preceding claims,
which has a plurality of light transmitters (22, 22a), in particular one light transmitter (22, 22a) per transmission point (22b), and/or which has a plurality of light receivers (32, 32a), in particular one light receiver (32, 32a) per reception point (32b).

6. The sensor (10) according to any of the preceding claims,
wherein light transmitter (22) and light receiver (32) form a coaxial arrangement and transmission optics (24) and receiving optics (30) are combined in a common optics.

7. The sensor (10) according to any of the preceding claims,
comprising a movable deflection unit (12), which is used to periodically guide the transmitted light beams (26) through the monitoring area (20), wherein in particular the deflection unit (12) is configured in the form of a rotatable scanning unit wherein the light transmitter (22) and/or the light receiver (32) is accommodated.

8. The sensor (10) according to any of the preceding claims,

wherein the evaluation unit (40) is configured to determine a distance of the objects from a light time of flight between the transmission of the light beams (26) and the reception of the remitted light beams (28).

9. A method for detecting objects in a monitoring area (20) by means of a laser scanner, wherein a plurality of light beams (26) separated from one another are transmitted through transmission optics (24), each starting from a transmission point (22b), a respective reception signal is generated from the remitted light beams (28) remitted by the objects and impinging in a respective reception point (32b) after passing through receiving optics (30), and the reception signals are evaluated in order to obtain information about the objects, wherein the receiving optics (30) and/or the transmission optics (24) are a two-lens objective which comprises a first lens (50) and a second lens (52), wherein the receiving optics (30) and/or the transmission optics (24) are configured for an annular field of view with field angle $\alpha$, and wherein due to the design of the first lens (50) light beams (54, 56) of each individual transmission point and/or reception point with field angle $\alpha$ pass only one half of the second lens (52) in that the inequality $d \geq (D1*f1)/(D1+2*f1*\tan \alpha)$ is satisfied for the two-lens objective, with focal length f1 and diameter D1 of the first lens (50) and distance d between the first lens (50) and the second lens (52), and in that the transmission points (22b) are arranged on a first circular line (48a) and/or the reception points (32b) are arranged on a second circular line (48b).

**Revendications**

1. Capteur optoélectronique (10), réalisé sous forme de scanner laser, pour la détection d'objets dans une zone à surveiller (20), comprenant au moins un émetteur de lumière (22) pour émettre plusieurs rayons lumineux (26), séparés les uns des autres, à partir d'un point d'émission (22b) respectif, une optique d'émission (24) pour les rayons lumineux (26) émis, au moins un récepteur de lumière (32) pour générer un signal de réception respectif à partir des rayons lumineux réémis (28), réfléchis par des objets et arrivant en un point de réception (32b) respectif, une optique de réception (30) pour les rayons lumineux réémis (28), et une unité d'évaluation (40) pour obtenir des informations sur les objets à partir des signaux de réception, dans lequel l'optique de réception (30) et/ou l'optique d'émission (24) est un objectif à deux lentilles comprenant une première lentille (50) et une seconde lentille (52), l'optique de réception (30) et/ou l'optique d'émission (24) est/sont réalisée(s) pour un champ de vision en forme d'anneau circulaire ayant un angle de champ de vision $\alpha$, la première lentille (50) est réalisée de telle sorte que des faisceaux lumineux (54, 56) de chaque point d'émission individuel et/ou de chaque point de réception individuel ayant l'angle de champ de vision $\alpha$ n'atteignent qu'une moitié de la seconde lentille (52) du fait que pour l'objectif à deux lentilles, l'inégalité $d \geq (D1*f1)/(D1+2*f1*\tan \alpha)$ est satisfaite, avec la distance focale f1 et le diamètre D1 de la première lentille (50) et avec la distance d entre la première lentille (50) et la seconde lentille (52), et les points d'émission (22b) sont disposés sur une première ligne circulaire (48a) et/ou les points de réception (32b) sont disposés sur une seconde ligne circulaire (48b).

2. Capteur (10) selon la revendication 1, dans lequel s'applique au moins approximativement $d = (D1*f1)/(D1+2*f1*\tan \alpha)$.

3. Capteur (10) selon l'une des revendications précédentes, dans lequel la distance focale f2 de la seconde lentille (52) correspond à la distance entre la première lentille (50) et la seconde lentille (52).

4. Capteur (10) selon l'une des revendications précédentes, dans lequel la première lentille (50) a un petit nombre d'ouverture k1, en particulier k1 = 1.

5. Capteur (10) selon l'une des revendications précédentes, comprenant une multitude d'émetteurs de lumière (22, 22a), en particulier un émetteur de lumière (22, 22a) par point d'émission (22b), et/ou une multitude de récepteurs de lumière (32, 32a), en particulier un récepteur de lumière (32, 32a) par point de réception (32b).

6. Capteur (10) selon l'une des revendications précédentes, dans lequel l'émetteur de lumière (22) et le récepteur de lumière (32) forment un agencement coaxial, et l'optique d'émission (24) et l'optique de réception (30) sont regroupées en une optique commune.

7. Capteur (10) selon l'une des revendications précédentes, comprenant une unité de déviation mobile (12) à l'aide de laquelle les rayons lumineux émis (26) sont périodiquement guidés à travers la zone à surveiller (20), l'unité de déviation (12) étant en particulier réalisée sous la forme d'une unité de balayage rotative dans laquelle est logé l'émetteur de lumière (22) et/ou le récepteur de lumière (32).

8. Capteur (10) selon l'une des revendications précédentes,
dans lequel l'unité d'évaluation (40) est réalisée pour déterminer une distance des objets à partir d'un temps de parcours de lumière entre l'émission des rayons lumineux (26) et la réception des rayons lumineux réémis (28).

9. Procédé de détection d'objets dans une zone à surveiller (20) au moyen d'un scanner laser, dans lequel plusieurs rayons lumineux (26) séparés les uns des autres sont émis par une optique d'émission (24) à partir d'un point d'émission (22b) respectif, un signal de réception respectif est généré à partir des rayons lumineux réémis (28), réfléchis par les objets et arrivant en un point de réception (32b) respectif après avoir traversé une optique de réception (30), et les signaux de réception sont évalués, afin d'obtenir des informations sur les objets, l'optique de réception (30) et/ou l'optique d'émission (24) est un objectif à deux lentilles comprenant une première lentille (50) et une seconde lentille (52), l'optique de réception (30) et/ou l'optique d'émission (24) est/sont réalisée(s) pour un champ de vision en forme d'anneau circulaire ayant un angle de champ de vision $\alpha$, et grâce à la configuration de la première lentille (50), des faisceaux lumineux (54, 56) de chaque point d'émission individuel et/ou de chaque point de réception individuel ayant l'angle de champ de vision $\alpha$ n'atteignent qu'une moitié de la seconde lentille (52) du fait que pour l'objectif à deux lentilles, l'inégalité $d \geq (D1*f1)/(D1+2*f1*\tan \alpha)$ est satisfaite, avec la distance focale f1 et le diamètre D1 de la première lentille (50) et avec la distance d entre la première lentille (50) et la seconde lentille (52), et les points d'émission (22b) sont disposés sur une première ligne circulaire (48a) et/ou les points de réception (32b) sont disposés sur une seconde ligne circulaire (48b).

Figur 1

Figur 2a

Figur 2b

Figur 2c

Figur 3

EP 3 640 667 B1

Figur 4

Figur 5

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- DE 102015121839 A1
- US 20060187470 A1
- CN 107861317 A